# NEUE EUROPÄISCHE PATENTSCHRIFT

(11) **EP 0 841 785 B2**
(45) Veröffentlichungstag und Bekanntmachung des Hinweises auf die Entscheidung über den Einspruch: **21.01.2009**
(45) Hinweis auf die Patenterteilung: 20.10.2004
(21) Anmeldenummer: 97113213.9
(22) Anmeldetag: 31.07.1997
(51) Int. Cl.: H04L 12/58, H04M 11/00

(54) **Verfahren zur Übertragung oder Übermittlung von Daten an registrierende und/oder steuernde Geräte**
Method for data transmission to control and/or monitoring devices
Procédé pour la transmission de données vers des dispositifs d'enregistrement et/ou de contrôle

(30) Priorität: 03.08.1996 DE 19631449; 09.08.1996 DE 19632180
(43) Veröffentlichungstag der Anmeldung: 13.05.1998
(73) Patentinhaber: ITF-EDV Fröschl GmbH, 93194 Walderbach (DE)
(72) Erfinder: Fröschl, Wilfried, 93152 Wetterzhausen (DE)
(74) Vertreter: Graf, Helmut

(56) Entgegenhaltungen:
- EP-A- 0 662 763
- WO-A-92/12590
- WO-A2-96/20553
- US-A- 4 713 837
- 'Compuserve network Services plant Internet-Gateway Nationale X.400-Anbieter rufen einen Netzverbund ins leben.' COMPUTERWOCHE.DE 10 März 1995, 'Borenstein et al,"MIME( Multipurpose Internet Mail Extensions)"RFC 1341,IETF,June 1992'

## Beschreibung

Die Erfindung bezieht sich auf ein Verfahren zur Übertragung von Daten '. Verbrauchszählern an berechtigte Rechner gemäß Oberbegriff Patentanspruch 1.

Bisher ist es üblich, daß Sondervertragskunden (z.B. Industrie oder größere Gewerbebetriebe) von Energieversorgungsunternehmen monatlich abgerechnet werden. Unter anderem um Zinsverluste zu vermeiden, soll die Rechnungslegung möglichst schnell erfolgen. Hierzu werden die Daten der Verbrauchszähler vor Ort manuell oder automatisch mit Datenfernübertragung ausgelesen bzw. an ein Abrechnungssystem übertragen. Bei dieser Datenfernübertragung ist es erforderlich, mit jedem einzelnen Verbrauchszähler eine Verbindung aufzubauen. Der Verbindungsaufbau erfolgt dabei entweder vom Abrechnungssystem oder aber von dem jeweiligen Elektrizitätszähler her. Bei diesem bekannten Verfahren können die Verbrauchszähler eines Versorgungsunternehmens nur nacheinander abgelesen werden. Ist es aus zeitlichen Gründen notwendig, daß mehrere Verbrauchszähler parallel abgelesen werden, so bedeutet dies u.a. eine wesentliche Erhöhung der Kapazität des Datenübertragungssysems und der Resourcen am Abrechnungssystem. Insbesondere bedeutet dies mehrere, im Parallelbetrieb arbeitende Übertragungseinrichtungen am Abrechnungssystem sowie eine hohe Leistungsfähigkeit dieses Systems.

Bekannt sind Systeme zur Übertragung von Daten von registrierenden und/oder steuernden Geräten an Berechtigte (FR-A-2 728 423, FR-A-27 28 42). Bei diesen bekannten Systemen werden die Daten mehrerer Verbrauchszähler in einer fest mit diesen Zählern verbundenen Daten-Sammeleinrichtung gesammelt und dann von dort von den berechtigten Rechnern oder Abrechnungssystemen über eine Datenfernübertragung direkt abgerufen. Nachteilig bei den bekannten Verfahren und Systemen ist grundsätzlich auch, daß in der Praxis hersteller- und/oder geräteabhängig sehr unterschiedliche Formate, Protokolle usw. für die Datenübertragung vorgesehen sind, und daß zum Abrufen, Bearbeiten usw. der Daten dann entsprechend angepaßte Werkzeuge bzw. Programme notwendig sind.

Bekannt ist weiterhin ein Verfahren sowie System zur Übertragung von Daten unterschiedlichster Datenquellen (WO 92/12590), beispielsweise auch Verbrauchsdaten über ein Datennetzwerk an eine Datensammeleinheit, aus der die Daten dann über eine Telefonleitung mit reduzierter Übertragungsfrequenz bzw. Datenübertragungsrate abgerufen werden können.

Bekannt ist weiterhin eine integrierte elektronische Mailbox (EP 0 662 763 A2), in der Daten unterschiedlicher Art, beispielsweise Sprachdaten und Bilddaten primär gespeichert und in ihrer ursprünglichen Form wieder abgerufen werden können.

Aufgabe der Erfindung ist es, ein Verfahren zur Übertragung von Daten von Verbrauchszählern an Berechtigte aufzuzeigen, welches die vorgenannten Nachteile vermeidetund ein Abrufen sowie Bearbeiten der Daten mit einfachen Mitteln ermöglicht. Zur Lösung dieser Aufgabe ist ein Verfahren entsprechend dem Patentanspruch ausgebildet.

Nach einem Aspekt der Erfindung sind sämtliche Verbrauchszähler eines Versorgungsunternehmens an ein Datenübertragungsnetz angeschlossen, welches wenigstens eine elektronische Mailbox ermöglicht. Die Daten sämtlicher Verbrauchszähler werden über das Datennetz in diese elektronische Mailbox geschickt und dort seriell von dem Abrechnungssystem abgeholt. Die Übertragung der Daten erfolgt hierbei entweder als kompletter Datensatz, der sämtliche Daten bzw. Einzelwerte des jeweiligen Verbrauchszählers enthält, oder aber in Form eines oder mehrerer ausgewählter Einzel-Datensätze.

Weiterbildungen der Erfindung sind Gegenstand der Unteransprüche. Die Erfindung wird im Folgenden anhand der Figuren an Ausführungsbeispielen näher erläutert. Es zeigen:

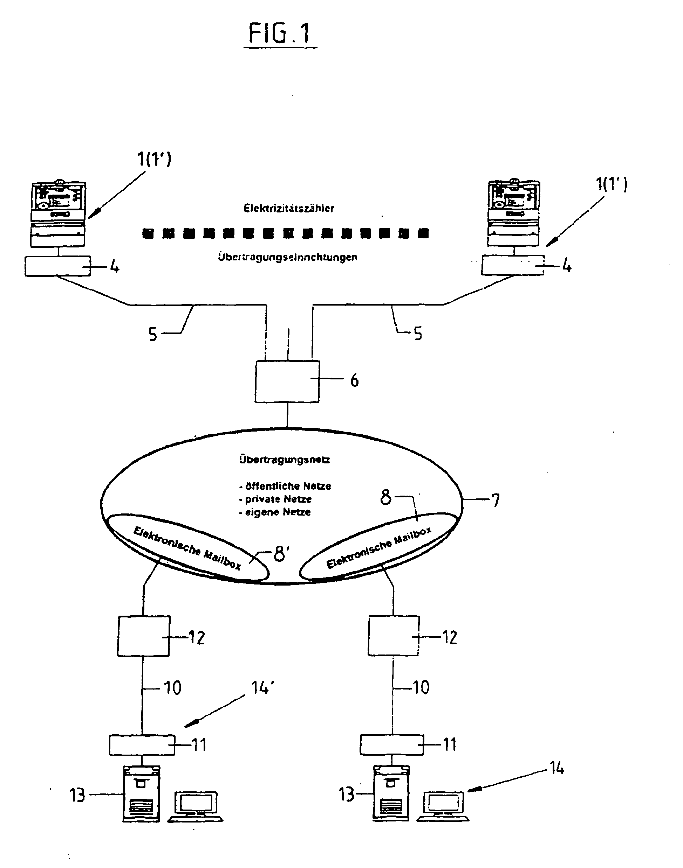

- Fig. 1: eine Vielzahl von Verbrauchs-Verbrauchszählern, nämlich Elektrizitäts- oder Stromzählern, die Kunden eines Elektrizitäts-Versorgungsunternehmens (EVU) zugeordnet sind;
- Fig. 2: eine schematische Darstellung zur Erläuterung der zu übertragenden Datensätze der Elektrizitätszähler;

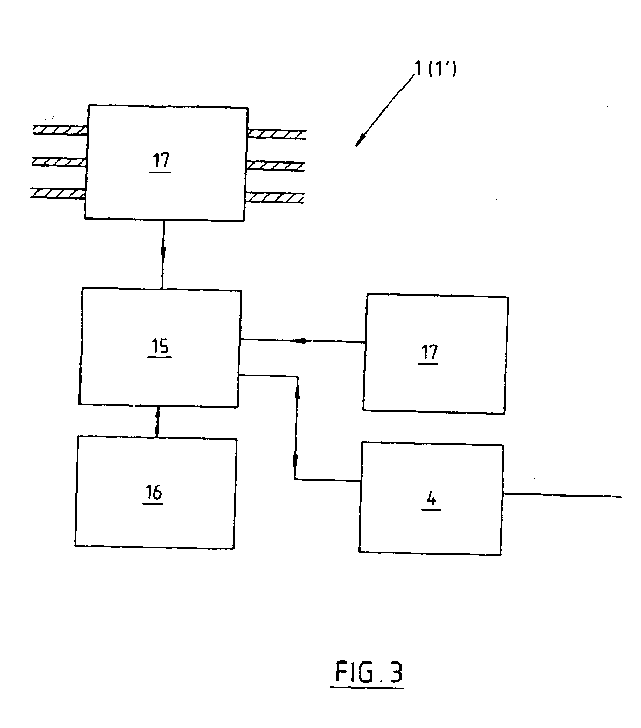

- Fig. 3: ein vereinfachtes Blockdiagramm eines Verbrauchszählers.

In den Figuren sind 1 Verbrauchs-Zähler, nämlich Elektrizitätszähler, die zu einem gemeinsamen EVU gehören und die jeweils einem Kunden zugeordnet sind. Sämtliche Zähler 1 sind für eine Fernübertragung der Zählerdaten so ausgebildet, daß sie jeweils die Zählerdaten in Form von Datensätzen 2 liefern, die bzw. deren Einzelwerte jeweils eine vorgegebene Struktur aufweisen, beispielsweise nach einer bestehenden Norm, z.B. IEC 1107 (DINEN 61107) oder nach EDIS (Energie-Daten-Identifikations-System).

Im einfachsten Fall bestehen die Einzeldaten aus einer mehrere Stellen oder Ziffern aufweisenden, vorausgestellten Kennung oder Kennziffer KZ, einer nachgestellten Hilfskennziffer HKZ und den nachgestellten zu übertragenden Daten. In der nachfolgenden Tabelle ist nur als Beispiel ein derartiger Datensatz 2 wiedergegeben.

**Tabelle**

| KZ | HKZ | DATEN | BESCHREIBUNG |
|---|---|---|---|
| FF | | (00) | Kein fataler Fehler |
| | | (01)-(99) | Fataler Funktionsfehler |
| FF | 01 | (00) | Zahler der Vermittlungen der Überwachungsschaltung |
| FF | 02 | (00) | Fehler im NOVRAM 1-Speicherbereich |
| FF | 03 | (00) | Fehler im NOVRAM 2 - Speicherbereich |
| FF | 04 | (00) | Fehler im EEPROM - Speicherbereich |
| FF | 05 | (00) | Fehler an Energieregisterdaten |
| FF | 06 | (00) | Fehler an Leistungsregisterdaten |
| FF | 07 | (00) | Fehler an Registern für die Zeit |
| FF | 08 | (00) | Fehler an Zeigern des Ringspeichers |
| FF | 09 | (00) | Ruckstellzahler-Überlauf |
| FF | 10 | (00) | Phasenspannungsausfall (Tabelle 2.2) |
| 00 | | 00000000 | Geratenummer 1 |
| 00 | 02 | 00000000 | Geratenummer 2 |
| 01 | | RR | Anzahl der Ruckstellungen |
| 02 | | 000.000 | Kumullierte Maxima M1 (kW) |
| 03 | | 000.000 | Kumullierte Maxima M2 (kW) |
| 06 | | 0.000 | Aktuelles Maximum M1 (kW) |
| 06 | RR-1 | 0.000 | Vorherige Abrechnungswerte der |
| | | | Maxima M1 (kW) |
| 06 | RR-2 | 0.000 | ... |
| | ... | ... | ... |
| 06 | RR-15 | 0.000 | ... |
| 07 | | 0.000 | Aktuelles Maximum M2 (kW) |
| 07 | RR-1 | 0.000 | Vorherige Abrechnungswerte der |
| | | | Maxima M2 (kW) |
| 07 | RR-2 | 0.000 | ... |
| | ... | ... | ... |
| 07 | RR-15 | 0.000 | ... |
| 08 | | 0000.00 | Aktueller Zahlerstand, Wirkenergie HT (kWh) |
| 08 | RR-1 | 0000.00 | Vorhenge Abrechnungswerte des Wirkenergieregisters - HT (kWh) |
| 08 | RR-2 | 0000.00 | ... |
| 08 | RR-15 | 0000.00 | ... |
| 09 | | 0000.00 | Aktueller Zählerstand, Wirkenergie NT (kWh) |
| 09 | RR-1 | 0000.00 | Vorherige Abrechnungswerte des |
| | | | Wirkenergieregisters - NT (kWh) |
| 09 | RR-2 | 0000.00 | ... |
| | ... | ... | ... |
| 09 | RR-15 | 0000.00 | ... |
| 10 | | 000 | Anzahl der Tage seit der Rückstellung |
| 42 | | 000.000 | Kumullierte Maxima M3 (kvar) |
| 43 | | 000.000 | Kumullierte Maxima M4 (kvar) |
| 46 | | 0.000 | Aktueller Maximum M3 (kvar) |
| 46 | RR-1 | 0.000 | Vorherge Abrechnungswerte der |
| | | | Maxima M3 (kvar) |
| 46 | RR-2 | 0.000 | ... |
| | ... | ... | ... |
| 46 | RR-15 | 0.000 | ... |
| 47 | | 0.000 | Aktueller Maximum M4 (kvar) |
| 47 | RR-1 | 0.000 | Vohrerige Abrechnungswerte der |
| | | | Maxima M4 (kvar) |
| 47 | RR-2 | 0.000 | ... |
| | ... | ... | ... |
| 47 | RR-15 | 0.000 | ... |
| 48 | | 0000.00 | Aktueller Zahlerstand - |
| | | | Blindenergie HT (kvarh) |
| 48 | RR-1 | 0000.00 | Vorherge Abrechnungswerte des |
| | | | Blindenergieregisters - HT (kvarh) |
| 48 | RR-2 | 0000.00 | ... |
| | ... | ... | ... |
| 48 | RR-15 | 0000.00 | ... |
| 49 | | 0000 00 | Aktueller Zahlerstand - |
| | | | Blindenergie NT (kvarh) |
| 49 | RR-1 | 0000.00 | Vorherige Abrechnungswerte des |
| | | | Blindenergieregisters - NT (kvarh) |
| 49 | RR-2 | 0000.00 | ... |
| | ... | ... | ... |
| 49 | RR-15 | 0000.00 | ... |
| 99 | | 0 | Blindmaximum - ja/nein |

Die Zähler 1 sind weiterhin so ausgeführt, daß dort entweder der Datensatz 2 in seiner Gesamtheit generiert und abgespeichert wird, wobei dann aus dem Datensatz 2 Einzeldatensätze 3₁ - 3ₙ gebildet werden können, die jeweils einzelne Gruppen des Gesamt-Datensatzes enthalten, beispielsweise die Fehlermeldungen mit der Kennung FF, die aktuellen Verbrauchswerte bzw. den aktuellen Zählerstand, die Verbrauchswerte in der Vergangenheit, ältere und jüngere Höchstwerte usw. Weiterhin können die Zähler 1 auch so ausgebildet sein, daß der Gesamt-Daten direkt in Form der Einzeldatensätze 3₁ - 3ₙ generiert und abgespeichert werden und/oder daß aus den Gesamt-Daten entsprechend einem internen Programm des jeweiligen Zählers 1 oder auf externe Anfrage Einzeldatensätze 3₁ - 3ₙ denjeweiligen Anforderungen entsprechend gebildet werden, die Zusammenstellung der Einzeldaten in den Datensätze also nicht fest vorgegeben ist, sondern der jeweiligen Anwendung entsprechend erfolgt. Jeder Zähler 1 ist weiterhin mit einer Echtzeituhr versehen, die in der nachfolgend noch näher beschriebenen Weise die Ausgabe der Daten steuert.

Jedem Zähler 1 ist weiterhin eine Übertragungseinrichtung 4 zugeordnet, über die dieser Zähler über einen Anschluß 5 mit einem Eingang bzw. Rechner 6 eines Datenübertragungsnetzes 7 verbunden ist. Der Anschluß 5 ist beispielsweise eine Telefonleitung eines analogen Telefonnetzes, eine Leitung eines digitalen Netzes, z.B. ISDN-Netzes oder aber eine Datenfunkstrecke. Die Übertragungseinrichtung 4, die auch in dem jeweiligen Zähler 1 integriert sein kann, ist beispielsweise ein Modem zur Umsetzung der digitalen Daten des Zählers 1 in solche Informationen, die über den Anschluß 5 (z.B. analoges Telefonnetz) übertragen werden können.

Das Datennetz 7 ist z.B. ein öffentliches Netz, beispielsweise das ISDN-Netz oder das Inter-Net, oder aber ein privates oder betriebseigenes Netz, welches von dem Versorgungsunternehmen oder aber mehreren solchen Versorgungsunternehmen gemeinsam unterhalten und genutzt wird.

Sämtlichen Zählern 1, die dem EVU gehören, oder aber jeder Gruppe solcher Zähler ist im Netz 7 eine elektronische Mailbox 8 zugeordnet. An diese Mailbox werden jeweils am Ende einer Abrechnungsperiode, beispielsweise nach Ablauf des letzten Tages eines Kalendermonats, die Daten der Zähler übermittelt und zwar gesteuert durch die Echzeituhr jedes Zählers 1 zu einem vorgegebenen Zeitpunkt. Das Datennetz 1 ist ein solches, welches von dem Benutzer bzw. Kunden dieses Datennetzes und/oder dessen Betreiber zur Übertragung von unterschiedlichsten Daten verwendet wird und keinesfalls speziell zur Übertragung der Daten der Zähler 1 eingerichtet ist, vielmehr diese Daten bezogen auf das Gesamtvolumen der im Netz 7 übertragenen Daten nur eine untergeordnete Rolle spielt, was auch bedeutet, daß die Kapazität des Datennetzes 7 sehr viel größer ist als dies für die Übertragung der Daten der Zähler 1 notwendig ist.

Über einen Anschluß 10 und eine Übertragungseinrichtung 11 ist an einen Eingang, beispielsweise Rechner 12 des Datenübertragungsnetzes 7 ein Rechner 13 angeschlossen, der Bestandteil eines Abrechnungssystems 14 ist und mit dem die Zähler-Daten ausgewertet und die Abrechnungen für den jeweiligen Kunden erstellt werden.

Die Daten der einzelnen Zähler 1 werden beispielsweise zunächst in der Mailbox 8 des Systems 7 für alle Zähler gesammelt. Erst dann, wenn alle Daten in der Mailbox vorliegen, werden sie vom Abrechnungssystem bzw. vom Rechner 14 in einem Block abgerufen. Grundsätzlich ist es aber auch möglich, die Daten in der Mailbox 8 jeweils zeitlich nacheinander abzurufen, und zwar beispielsweise immer dann, wenn sämtliche Daten eines Zählers 1 oder einer Gruppe von Zählern 1 vollständig vorliegen.

Aus Gründen der Datensicherheit erfolgt die Übertragung der Daten von den Zählern 1 an das Datenübertragungssystem 7, die Ablage der Daten in der dortigen Mailbox 8 sowie Übertragung der Daten von dem Datenübertragungssystem 7 an den Rechner 14 verschlüsselt bzw. kryptiert, wobei eine Decodierung bzw. Entschlüsselung dieser Daten dann im Rechner 13 vorgenommen wird.

Obwohl die Zähler 1 von der Zählerart und/oder Zählerleistung je nach Anwendungsfall oder Kunde grundsätzlich unterschiedlich sein können, sind sämtliche Zähler 1 des EVU als intelligente Zähler ausgeführt. Die Zähler besitzen u.a. einen Mikroprozessor 15, einen Daten- und Programmspeicher 16 sowie das eigentliche Meßwerk 17 zur Ermittlung der Verbrauchsdaten. Der Mikroprozessor 15 und der diesem zugeordnete quarzgesteuerte Taktgeber 18 bilden die Echzeituhr des Zählers 1. Unter Berücksichtigung der vom Meßwerk 17 ermittelten Daten werden der Gesamtdatensatz 2 und aus diesem die Einzeldatensätze 3₁-3ₙ gebildet.

Die Vorteile des beschriebenen Systems lassen sich u.a., wie folgt, zusammenfassen:
- *Durch die Übertragung der Datenzähler 1 an das Abrechnungssystem bzw*. *an den dortigen Rechner 13 ist ein Ablesen der einzelnen Zähler und*/*oder eine Übernahme der Daten aus diesen Zählern vor Ort nicht erforderlich, was eine wesentliche Reduzierung der Kosten bei der Abrechnung und Auswertung der Zählerdaten bedingt.*
- *Für die Fernübertragung der Zählerdaten wird kein eigenes Datenübertragungsnetz benötigt*, *vielmehr wird das Datennetz 7 verwendet, welches für eine Vielzahl weiterer Nutzungen zur Verfügung steht*.
- *Eine Vielzahl von Zählern 1 können gleichzeitig ihre Daten an die Mailbox 8 des Datennetzes 7 übertragen*.
- *Endpasse am Abrechnungssystem (Übertragungseinrichtungen*, *Leistungsfähigkeit) werden vermieden.*
- *Die Daten der Zähler 1 können in der Mailbox 8 gesammelt werden und die Abholung der Daten aus der Mailbox 8 durch das Abrechnungssystem 14 kann dann mit einem einzigen Verbindungsaufbau in einem Block erfolgen*.
- *Durch Nutzung von Übertragungsmedien*, *d*.*h*. *des Anschlußes 11 zwischen der Mailbox 8 und dem Rechner 13 kann die Übertragungszeit für die Daten wesentlich verkurzt werden*.
- *Die Daten sind durch Kryptierung geschützt.*

Grundsätzlich besteht bei dem vorbeschriebenen System die Möglichkeit, daß jeweils die gesamten Datensätze 2 der Zähler 1 zu dem jeweils vorgegebenen Datum und Zeitpunkt an die Mailbox 8 übertragen werden. Die Rechner 6 und 12 sind jeweils Bestandteil des-Netzes 7.

Das vorbeschriebene Verfahren bzw. System ist bei allen Zählern oder anderen registrierenden Geräten mit Datenschnittstelle oder integrierter Übertragungseinrichtung anwendbar. Das System ist weiterhin auch unabhängig von der speziellen Art der Übertragung der Daten und des Übertragungsmediums sowie des Datenübertragungsnetzes. Voraussetzung ist aber, daß das Datennetz einen Mailbox-Dienst oder einen vergleichbaren Dienst zur Verfügung stellt. Weiterhin ist das vorbeschriebene System selbstverständlich auch unabhängig von der Struktur des Abrechnungssystems 14 (Einplatzsystem, vernetzte Mehrplatzsysteme, hierarchisches System usw.).
Bei einer weiteren Ausführungsform der Erfindung ist vorgesehen, daß nur bestimmte, ausgewählte Einzeldatensätze, beispielsweise der Einzeldatensatz 3₁, der die für die Abrechnung relevanten Verbrauchsdaten enthält, beispielsweise
aktueller, am Ende der Abrechnungsperiode vorliegender Zählerstand für Wirkenergie für den hohen Tarif HT (Kennziffer 08),
aktueller Zählerstand für Wirkenergie für den niedrigen Tarif NT (Kennziffer 09),
aktueller Zählerstand für die Blindenergie für den hohen Tarif HT (Kennziffer 48),
aktueller Zählerstand für die Blindenergie für den niedrigen Tarifzeit NT (Kennziffer 49).

Weitere Einzeldatensätze 3₂ - 3ₙ werden entweder nur dann, wenn eine im Programm des jeweiligen Zählers 1 vorgesehene Prüfroutine eine Fehler feststellt und/oder in vorgegebenen Zeitperioden von den Zählern 1 ausgegeben, die (Zeitperioden) mehrere Abrechnungsperioden umfassen.

Durch die Übertragung nur jeweils des die abrechnungsrelevanten Daten enthaltenen Einzeldatensatzes 3₁ an die Mailbox 8 und von dieser an den Rechner 14 wird eine erhebliche Reduzierung der Datenmenge und damit auch eine Vereinfachung und Beschleunigung der Datenübertragung erreicht.

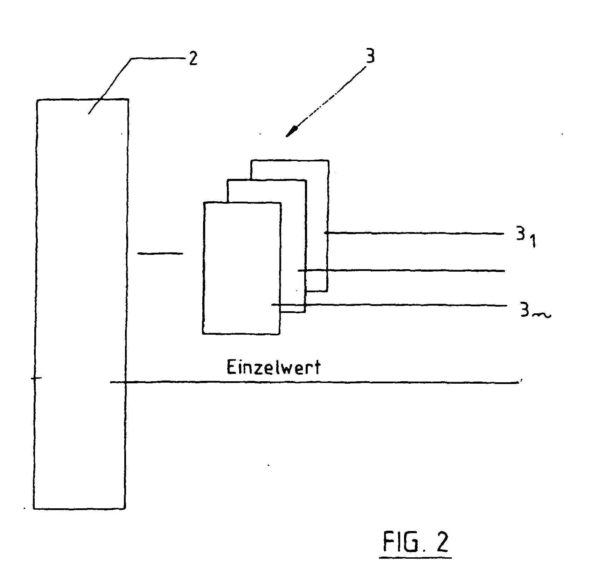

Grundsätzlich bietet aber die in der Fig. 2 wiedergegebene Aufgliederung des Datensatzes 2 in eine Vielzahl von Einzeldatensätzen 3₁ - 3ₙ Möglichkeiten, die auch unabhängig von der Art und Weise, wie die Daten von den Zählern 1 an das Abrechnungssystem 14 bzw. an den dortigen Rechner 13 gelangen, Vorteile bieten, da anstelle des gesamten Datensatzes 2 einzelne oder mehrere Einzeldatensätze abgefragt werden können. Auch die Abfrage eines Einzelwertes oder aber mehrerer Einzelwerte bestehend aus den Kennzahlen KZ und HKZ und dem eigentlichen Datenwert ist dann möglich, so daß insbesondere folgende Abfragen zur Verfügung stehen:
gesamter Datensatz 2
ein ausgesuchter oder aber mehrere ausgesuchte Einzeldatensätze
ein ausgewählter oder mehrere ausgewählte Einzelwerte.

Die Zähler 1 sind hierfür dann so ausgebildet, daß sie über das Datennetz 7 individuell zur Abgabe der Daten in der jeweils gewünschten Form (Gesamtdatensatz 2, Einzeldatensatz 3₁ - 3ₙ oder Einzeldaten) ansteuerbar sind.

Das Prinzip der Untergliederung des gesamten Datensatzes 2 in eine Vielzahl von Einzeldatensätzen ist unabhängig von dem jeweiligen Kennziffernsystem und hat den Vorteil, daß eine Untermenge des gesamten Datensatzes 2 abgefragt werden kann. Die Abfrage kann über das Datennetz 7, aber auch über eigene Datenübertragungsstrecken des Versorgungsunternehmens erfolgen. Weiterhin ist die Abfrage einzelner Daten auch vor Ort mittels tragbarer, an die Zähler 1 anzuschließender Einrichtungen (Laptop, Handterminal usw.) möglich.

Die vorbeschriebenen Systeme bzw. Verfahren sind nicht nur für Elektrizitätszähler 1, sondern auch für andere Verbrauchszähler geeignet, beispielsweise zum Messen von Gas, Wasser und Wärmeenergie.

Die Erfindung wurde voranstehend an Ausführungsbeispielen beschrieben. Es versteht sich, daß zahlreiche Änderungen sowie Abwandlungen möglich sind.

### Bezugszeichenliste

- 1: Zähler
- 2: Datensatz
- 3₁ - 3ₙ: Einzeldatensatz
- 4: Übertragungseinrichtung (z.B. Modem)
- 5: Anschluß
- 6: Netzeingang bzw. Rechner
- 7: Datennetz
- 8: Mailbox
- 10: Anschluß
- 11: Übertragungseinrichtung
- 12: Netzeingang bzw. Rechner
- 13: Rechner
- 14: Abrechnungssystem
- 15: Mikroprozessor
- 16: Speicher
- 17: Meßwerk
- 18: Taktgeber

## Patentansprüche

1. Verfahren zur Übertragung von Daten (2, 3) von Verbrauchszählern (1) an berechtigte Rechner von Abrechnungssystemen, wobei die Daten der Verbrauchszähler (1) über einen Zugangsrechner (6) an in einem öffentlichen Datennetz (7) eingerichtete Datensammeleinheiten mit Mailboxfunktion übertragen und zwischengespeichert werden, aus denen die Daten von den berechtigten Rechnern abrufbar sind, **dadurch gekennzeichnet, daß** als öffentliches Datennetz (7) das Datenserversystem des Internets mit seinem Mailboxdienst verwendet wird.

2. Verfahren nach Anspruch 1, **dadurch gekennzeichnet, daß** die Übertragung der Daten jeweils als ein kompletter Datensatz (2) erfolgt, der verbrauchsrelevante Daten und weitere Informationen über die Art und/oder den Zustand des jeweiligen Verbrauchszählers (1) enthält.

3. Verfahren nach Anspruch 1, **dadurch gekennzeichnet, daß** die Übertragung der Daten in Form eines oder mehrerer Einzeldatensätze (3₁ - 3ₙ) erfolgt, von denen mehrere, ausgewählte Einzelwerte enthalten.

4. Verfahren nach Anspruch 3, **dadurch gekennzeichnet, daß** in jedem Verbauchszähler (1) eine Vielzahl von Einzeldatensätzen (3₁ - 3ₙ) gebildet wird, die jeweils bestimmte, vorgegebene oder ausgewählte Einzelwerte enthalten.

5. Verfahren nach einem der vorhergehenden Ansprüche, **dadurch gekennzeichnet, daß** das Abrufen der Daten aus der jeweiligen Mailbox (8) erst dann erfolgt, wenn diese Daten wenigstens eines Verbrauchzählers (1) dort komplett vorliegen.

6. Verfahren nach einem der vorhergehenden Ansprüche, **dadurch gekennzeichnet, daß** das Abrufen der Daten aus der Mailbox (8) erst dann erfolgt, wenn die Daten sämtlicher Verbrauchszähler (1), für die für eine Abrechnungsperiode eine Abrechnung erstellt werden soll, dort vollständig vorliegen.

7. Verfahren nach einem der vorhergehenden Ansprüche, **dadurch gekennzeichnet, daß** das Übertragen der Daten von den Verbrauchszählern an die Mailbox (8) jeweils zu einem vorgegebenen Datum und Zeitpunkt erfolgt

8. Verfahren nach Anspruch 7, **dadurch gekennzeichnet, daß** das Übertragen der Daten von den Verbrauchszählern an die Mailbox (8) gesteuert durch an die Verbrauchszähler (1) übertragene Steuersignale und/oder durch an Verbrauchszählern vorgesehene externe oder integrierte Echtzeituhren (17/15) erfolgt.

9. Verfahren nach einem der vorhergehenden Ansprüche, **dadurch gekennzeichnet, daß** die Daten sämtlicher Verbrauchszähler (1) eines Versorgungsunternehmens an die Mailbox (8) des Datennetzes (7) übertragen werden.

10. Verfahren nach einem der vorhergehenden Ansprüche, **dadurch gekennzeichnet, daß** weitere Einzeldatensätze oder Einzelwerte jeweils auf Abfrage bzw. Aufforderung von dem jeweiligen Verbrauchszähler (1) zur Verfügung gestellt werden.

## Claims

1. Method for transmitting data (2, 3) from supply meters (1) to authorised computers of account settlement systems, wherein the data from the supply meters (1) are transmitted via an access computer (6) to data collection units with mailbox functions which are set up in a public data network (7), and are stored intermediately there, from which [units] the data can be called up by the authorised computers, **characterised in that**
the data se4rver system of the internet with its mailbox service is used as the public data network (7).

2. Method in accordance with claim 1, **characterised in that** the transmission of the data takes place respectively as a complete data record (2) which contains information relevant to consumption and further information relating to the nature and/or the state of the respective supply meter (1).

3. Method in accordance with claim 1, **characterised in that** the transmission of the data takes place in the form of one or more individual data records (3₁ --3ₙ), several of which contain selected individual values.

4. Method in accordance with claim 3, **characterised in that** in each supply meter (1), numerous individual data records (3₁ - 3ₙ) are formed, which respectively contain particular predetermined or selected individual values.

5. Method in accordance with one of the preceding claims, **characterised in that** the data are called up from the respective mailbox (8) only once these data for at least one supply meter (1) are present there in their entirety.

6. Method in accordance with one of the preceding claims, **characterised in that** the data are called up from the respective mailbox (8) only once the data for all the supply meters (1) for which a bill is to be produced for a charging period are present there in their entirety.

7. Method in accordance with one of the preceding claims, **characterised in that** the transmission of the data from the supply meters to the mailbox (8) takes place respectively at a given date and time.

8. Method in accordance with claim 7, **characterised in that** the transmission from the supply meters to the mailbox (8) takes place such that it is controlled by control signals that are transmitted to the supply meters (1), and/or by external or integrated real time clocks (17/15) that are provided on supply meters.

9. Method in accordance with one of the preceding claims, **characterised in that** the data from all the supply meters (1) of a utility supply company are transmitted to the mailbox (8) of the data network (7).

10. Method in accordance with one of the preceding claims, **characterised in that** further individual data records or individual values are respectively made available by the respective supply meter (1) on request or on demand.

## Revendications

1. Procédé de transmission de données (2, 3) de compteurs de consommation (1) à des ordinateurs autorisés de systèmes de comptabilité , dans lequel les données des compteurs de consommation (1) sont transmises, via un serveur d'accès (6), à des unités collectrices de données installées dans un réseau public de données (7) avec une fonction de boîte de courrier électronique et y sont stockées temporairement, unités dans lesquelles les données peuvent être appelées par les ordinateurs autorisés, **caractérisé en ce que** l'on utilise comme réseau public de données (7) le système de serveur de données d'Internet avec son service de boîte de courrier électronique.

2. Procédé selon la revendication 1, **caractérisé en ce que** la transmission des données se fait respectivement sous la forme d'un article de données (2), qui contient des données relatives à la consommation et d'autres informations sur le type et/ou l'état du compteur de consommation respectif (1).

3. Procédé selon la revendication 1, **caractérisé en ce que** la transmission des données se fait sous la forme d'un ou de plusieurs articles de données individuels (3₁-3ₙ), dont plusieurs contiennent des valeurs individuelles sélectionnées.

4. Procédé selon la revendication 3, **caractérisé en ce que**, dans chaque compteur de consommation (1), est formée une pluralité d'articles de données individuels (3₁-3ₙ) qui contiennent des valeurs individuelles respectivement déterminées, prédéterminées ou sélectionnées.

5. Procédé selon l'une quelconque des revendications précédentes, **caractérisé en ce que** l'appel des données de la boîte de courrier électronique respective (8) ne se fait que lorsque ces données d'au moins un compteur de consommation (1) y sont présentes intégralement.

6. Procédé selon l'une quelconque des revendications précédentes, **caractérisé en ce que** l'appel des données de la boîte de courrier électronique (8) ne se fait que lorsque les données de tous les compteurs de consommation (1), pour lesquels une facturation doit être établie sur une période de facturation, y sont présentes intégralement.

7. Procédé selon l'une quelconque des revendications précédentes, **caractérisé en ce que** la transmission des données des compteurs de consommation à la boîte de courrier électronique (8) se fait respectivement à une date et une heure prédéterminées.

8. Procédé selon la revendication 7, **caractérisé en ce que** la transmission de données des compteurs de consommation à la boîte de courrier électronique (8) est commandée par des signaux de commande transmis aux compteurs de consommation (1) et/ou par des horloges en temps réel (17/15), externes ou intégrées, prévues sur les compteurs de consommation.

9. Procédé selon l'une quelconque des revendications précédentes, **caractérisé en ce que** les données de tous les compteurs de consommation (1) d'un fournisseur sont transmises à la boîte de courrier électronique (8) du réseau de données (7).

10. Procédé selon l'une quelconque des revendications précédentes, **caractérisé en ce que** d'autres articles de données individuels ou valeurs individuelles sont mis à disposition respectivement sur demande ou sur appel du compteur de consommation respectif (1).
